# EUROPEAN PATENT APPLICATION

(11) **EP 2 535 860 A2**
(43) Date of publication of application: **19.12.2012**
(21) Application number: 11742423.4
(22) Date of filing: 08.02.2011
(51) Int. Cl.: G06Q 50/00

(54) **METHOD FOR SYNCHRONISING CHARACTER INFORMATION ACCORDING TO DATA-TYPE CLASSIFICATION**

(30) Priority: 12.02.2010 KR 20100013526
(71) Applicant: Blueside Inc., Seongnam-si, Gyeonggi-do 463-828 (KR)
(72) Inventor: KANG, Byong Soo, Seoul 133-827 (KR)
(74) Representative: Colombo, Michel
(86) International application number: PCT/KR2011/000791
(87) International publication number: WO 2011/099731

(57) **Abstract**

A method of synchronizing character information by data classification in an on-line game system is disclosed, which includes the steps of: transferring character information including position data, which is generated from a positional shift of a first user's character, or motion data, which is generated from a motional change of the character, to a second user; receiving the character information by the second user; determining a data type of the character information; and processing the character information with reference to the data type.

## Description

### TECHNICAL FIELD

The present invention relates generally to synchronization of character information in on-line games, and particularly to a method of synchronizing character information to provide coincidence of the character information between game users by classifying character information with data types.

### RELATED ART

Along a recent growth in the on-line game market, users are steadily increasing therewith. By evolving gaming functions as time goes on, they are scaling up broader and becoming more diverse. In those trends, the number of objects appearing at a game is increasing as also, developing various ways for processing such obj ects.

Especially, in on-line games, many users possess their own characters assigned to themselves, each user being capable of managing and operating his character for himself on desire. During this, if a user makes changes on his characters' information such as positions or motions, other users should be coincidently provided with the changes of character information through their gamming screens.

There has been a conventional manner for synchronizing character information between users, in which character information is continuously transferred from a user toward other users regardless of the user's operations on the characters. Therefore, an amount of data can be exceedingly extended when data are present in multiplicity thereat.

Additionally, since character information can be transferred to other users even though characters' positions or actions have not ever been changed, it has a problem of unnecessarily dissipating information but valid data.

### DETAILED DESCRIPTION OF THE INVENTION

### TECHNICAL SUBJECTS

Accordingly, the present invention is directed to provide a method of synchronizing character information between game users by data classification with position and motion data.

The present invention is also directed to provide a method of synchronizing character information between game users by data classification, in which the character information accords to the classification of data types generated only when characters' positions are changed or specific motions are carried out.

The present invention is also directed to provide a method of synchronizing character information between game users by data classification, in which position data are generated with predetermined intervals and represent procedures of positional changes by comparing just-prior position data to the latest position data.

The subjects of the present invention will not be restricted to the aforementioned and other subjects can be understood by those skilled in the art through the following description.

### MEANS FOR SOLVING THE SUBJECTS

In an embodiment, a method of synchronizing character information by data classification in an on-line game system may comprise the steps of: transferring character information including position data, which is generated from a positional shift of a first user's character, or motion data, which is generated from a motional change of the character, to a second user; receiving the character information by the second user; determining a data type of the character information; and processing the character information with reference to the data type.

Transferring the character information may be comprised of: immediately transferring first position data to the second user if the character is changed over a predetermined distance in position from a stop state; and transferring position data, which is generated after a predetermined interval from just-prior position data that has been transferred, to the second user if the character is continuously shifted over the predetermined distance in position from a former state.

Processing the character information may be comprised of: shifting the character in position with reference to the first position data if the character is in a stop state; and shifting the character in position by calculating a shift distance obtained from comparing the just-prior position data with the latest position data received after the predetermined interval from the just-prior position data if the character is shifting in position.

The character may be shifted in position with a frame shift distance obtained from dividing the shift distance by the number of frames per the predetermined interval that is output from multiplying the predetermined interval by the number of frames per second of an animation representing the character.

The character's motions included in the motion data may be provided with motion numbers different each other and the motion data is transferred and received in forms of the motion numbers.

Transferring the character information may be comprised of immediately transferring the motion data to the second user if the character is changed in motion, and wherein the processing may be comprised of immediately changing the character in motion in correspondence with the received motion data.

The motion data may include still motion data operable only if the character is in a stop state, and shift motion data operable even if the character is shifting in position.

The motion data may include still motion data operable only if the character is in a stop state, and shift motion data operable even if the character is shifting in position; and wherein the processing may comprised of changing the character in motion after shifting the character in correspondence with a comparison between the just-prior position data and the latest position data if the still motion data is received within the predetermined interval.

### EFFECTS OF THE INVENTION

This method of synchronizing character information by data classification has advantages as follows.

First, the character information is subdivided into position and motion data to save a capacity for individual information.

Second, the character information is generated only when characters' positions are changed or motions are carried out, less dissipating the character information and reducing an operation load in the system.

Third, lightening the total operation load in the system enables more character information to be processed at a time, so that a large quantity of characters can be practiced at the same time.

Fourth, it is available for plausible and graceful motions of characters because the position data are generated in the predetermined intervals, the just-prior position data are compared with the latest position data, and the character animation frame is arranged according to the calculated ratio.

Effects of the present invention will not be restrictive to the aforementioned and other effects not described here can be understood definitely by those skilled in the art through.

### BRIEF DESCRIPTION OF THE DRAWINGS

Fig. 1 is a flow chart showing a process of synchronizing character information between users by data classification according to an embodiment of the present invention.

Fig. 2 shows a status of a character to which position data is generated by an embodiment according to the present invention.

Fig. 3 is a schematic diagram showing a feature for changing a character' position by an embodiment according to the present invention.

Fig. 4 is a schematic diagram showing a feature for processing still motion data, when the still motion data is received while changing a character's position, by an embodiment according to the present invention.

Fig. 5 is a flow chart showing a general process of synchronizing character information by data classification according to an embodiment of the present invention.

### THE BEST MODE FOR EMBODING THE INVENTION

Hereinafter will now be described preferred embodiments for reducing the objects of the present invention with reference to the accompanying drawings. In this description, the same elements or components will be referred to the same names, numerals or signs, which are not duplicated by explanation.

The present invention provides a method for synchronizing character information between game users to render each user to play an on-line game on coincident screens, in which the character information is transferred from the user to other users when there is a change from positions or motions of the characters assigned to be operable by the user in the on-line game.

Character information according to the present invention contains position data generated responding to positional changes of characters, or motion data generated responding to various motional changes of characters. In other words, position data are generated if characters are enforced to move by users' intent or passively shifted due to other objects, and motion data are generated when characters take specific motions.

Classifying character information into such position and motion data as such makes it possible to save a capacity for character information. And as data are generated only when there is an actual event of shift and motion, the system operating an on-line game can be lessened with efficiency in load.

The details about position and motion data will be explained later.

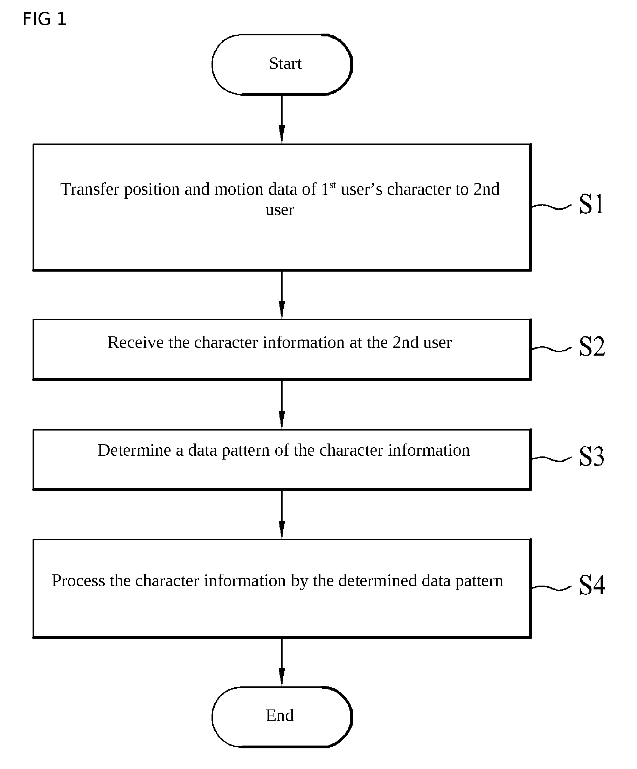

Fig. 1 shows a process of synchronizing character information between users by data classification according to an embodiment of the present invention.

With reference to Fig. 1 exemplifying steps for performing an embodiment fo the present invention, a process of synchronizing character information between first and second users will be detailed.

First, character information can be generated when a first user shifts his character or operates it to take s specific motion, or even when a first user's character is changed in position and motion by another user's character or an object given in the game.

During this, the character information may be one of position and motion data, which is transferred to the second user as soon as it is generated.

This process is step S1 to transfer the position and motion data of the first user's character to the second user.

The transferred character information is received at the second user, which is step S2 to accept the character information by the second user.

The character information of the first user's character, which is received as such, is determined whether it is position data or motion data. This is step S3 to find out a data type of the character information.

If the character information is position data, it is processed as position data. Otherwise if the character information is motion data, it is processed as motion data. This is step S4 to process the character information in accordance with a data type determined from step S3.

After the aforementioned steps, matters changed from the first user's character are applied and displayed on the second user's screen. Thus, a status of the first user's character is coincident between the first and second users' screens.

Now will be described a feature of transferring and processing the position and motion data.

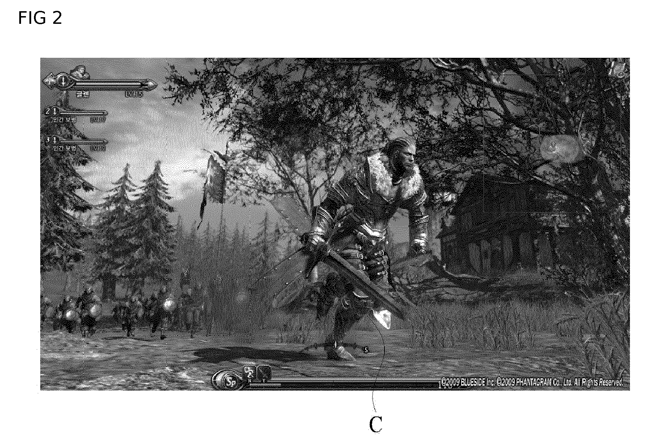

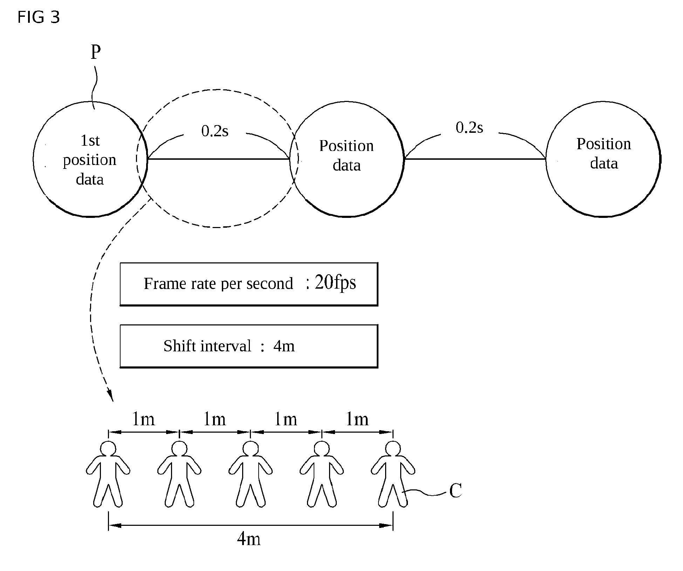

Fig. 2 shows a status of a character to which position data is generated by an embodiment according to the present invention, and Fig. 3 schematically illustrates a feature for changing a character' position by an embodiment according to the present invention.

Referring to Fig. 2, character C operated by the first user is moving toward a specific position. Character information generated during this operation is position data. In general, position data may include information about coordinate, direction and time.

In detail, position data is not generated when character C stops. But if the character's position is identified as being changed over a predetermined distance from the stop, first position data P is generated then. Here, the predetermined distance is a value preliminarily set and input into the system and first position data P is promptly transferred to the second user.

If character C continues to change its position, position data are generated in a predetermined interval after first position data P has been generated. That is, even though the first position data has been generated, position data is created can be created after the predetermined interval whenever a current position of character C is found as being shifted over the predetermined distance.

For instance, referring to Fig. 3, in case that the predetermined is set to 0.1m and the predetermined interval is set to 0.2 seconds, first position data P is generated at the time when character C shifts by 0.1m from its stop state, and then immediately transferred to the second user.

Even after that, if character C is identified as being shifted, new position data is generated every 0.2 seconds and transferred to the second user.

Consequently, the second user receives such position data transferred thereto, then a position of character C on the second user's screen is changed, through step S4, according to information by for example first position data P. Also even after that, if character C continues to shift, just-prior position data is compared to the latest position data and a position of character C is further changed along a displacement calculated from the comparison.

During this, in processing shifts of character C in the predetermined intervals, frames picturing animations of character C can be arranged with definite ratios in the predetermined intervals for the purpose of representing motions in a plausible and graceful form.

Here, a frame rate per second means the number of pictures expressible in one second, using fps (frames per second) as the unit. As high as a value of fps, a motion can be represented smoother.

For example, referring to Fig. 3, assuming that a frame rate per second is 20 fps, a predetermined interval is 0.2 seconds, and character C is shifted by 4m in the predetermined interval, 4 frames are used for the shift of character C within 0.2 seconds.

During this, as character C is shifted by 4m in full, each frame can be arranged every 1m. Therefore, it is possible to express the 4m-shift of character C very plausibly in 0.2 seconds.

As described above, character information between the first and second users can be synchronized by way of the steps of processing such generated position data.

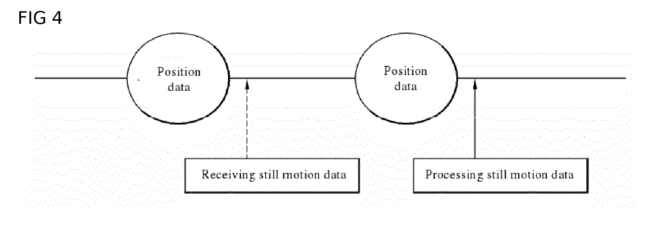

Fig. 4 schematically illustrates a feature for processing still motion data, when the still motion data is received while changing a character's position, by an embodiment according to the present invention. Now an embodiment about the motion data will be described with reference to Fig. 4.

The motion data is character information generated when character C operated by the first user is acting a specific motion but shift. There are a variety of motions, but shift, permissible to character C, character information of which is called motion data.

As many as motion data, it could be inconvenient due to a volume of the motion data if the motion data are transferred and received as they are. For that reason, a motion number may be provided to each motion of character C, corresponding to the motion data, and then the motion data may be transferred and received to the second user in a form of the motion number. Thus, an amount of data can be reduced to process the motion data faster.

In the meantime, motion data may include still motion data conductible operable only when character C is in a stop state, and shift motion data operable even when character C is shifting in position.

For instance, if it is possible for character C to flourish a weapon while shifting, the motion data may be classified into shift motion data. Otherwise, if it is impossible for character C to take a motion with shift, just capable of such as sitting on the ground or concentrating energy, the motion data may be classified into still motion data.

This motion data is transferred to the second user at step S1 as soon as character information is generated by a motional change of character C. And in step S4, the character information received by the second user is immediately applied thereto.

For instance, if the first user operates character C to brandish a weapon, this motion is displayed on the second user's screen, That is, all of shift and still motion data are transferred to the second user as soon as new character information by a motion of character C is generated.

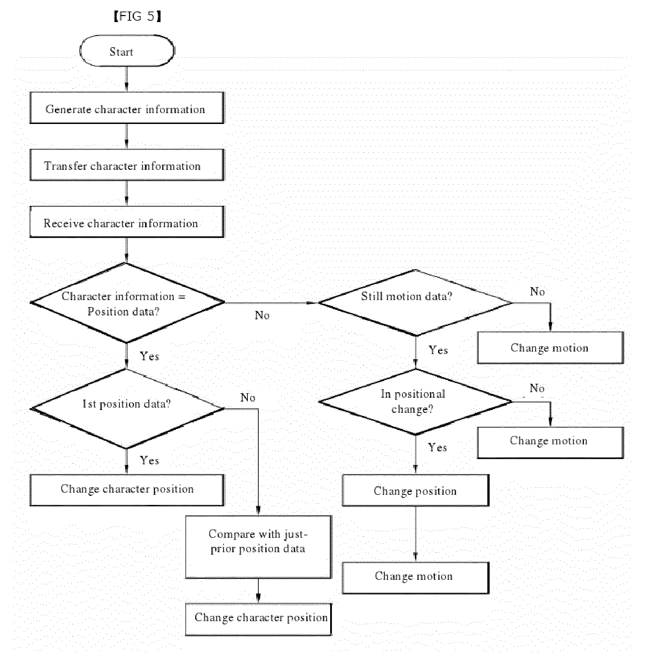

Meanwhile, if still motion data is generated while character C is shifting in position, the still motion data is processed after processing position data. From Fig. 5, it can be seen that still motion data is received within the predetermined interval that is a term for which position data is generated, and that the still motion data is processed after position data after receipt of the still motion data has been processed.

In other words, if still motion data is generated while changing a position of character C, the still motion data is processed after processing the positional change of character C by comparing position data, which are before and after the generation of the still motion data, to each other.

With the explanation for transferring and processing position and motion data, now will be described a series of processing steps according to an embodiment of the present invention.

Fig. 5 shows a general process of synchronizing character information by data classification according to an embodiment of the present invention.

First, character information is generated in response to a positional change or motion of a first user's character. Then, the character information is transferred to a second user and the second user receives the character information. This process corresponds to transfer step S1 and reception step S2.

Subsequently, a step for identifying a type of the character information is carried out to determine whether the character information is position data or motion data.

If the character information is position data, this position data is further processed to be determined whether it is the first position data or not.

If the character information is not position data, it is regarded as motion data. This motion data is then processed to be determined whether it is still motion data or shift motion data, which corresponds to determination step S3.

Afterward, it continues to process each of character information. If the character information is identified to the first position data, the character is changed in position. Unless the character information is the first position data, the character is changed in position by using a varied distance calculated from comparing just-prior position data with current position data.

In addition, if the character information is identified as shift motion data, the character is immediately changed in motion. If the character information is identified as still motion data, a processing time varies depending on whether the character is shifting or not in position.

In case that the character information is still motion data, if the character is in stop, the character is immediately changed in motion. But in this case of still motion data, if the character is shifting in position, the character is changed in motion after the positional shift is completed. This corresponds to processing step S4.

As a result, the character information is synchronized between the first and second users through the aforementioned steps, offering a coincident screen about the character.

The foregoing is illustrative of exemplary embodiments and is not to be construed as limiting thereof. Although a few exemplary embodiments have been described, those skilled in the art will readily appreciate that many modifications are possible in exemplary embodiments without materially departing from the novel teachings and advantages. Accordingly, all such modifications are intended to be included within the scope of this invention as defined in the claims.

## Claims

1. A method of synchronizing character information by data classification in an on-line game system, the method comprising:
- transferring character information including position data, which is generated from a positional shift of a first user's character, or motion data, which is generated from a motional change of the character, to a second user;
- receiving the character information by the second user;
- determining a data type of the character information; and
- processing the character information with reference to the data type.

2. The method according to claim 1, wherein transferring the character information is comprised of:
- immediately transferring first position data to the second user if the character is shifted over a predetermined distance in position from a stop state; and
- transferring position data, which is generated after a predetermined interval from just-prior position data that has been transferred, to the second user if the character is continuously shifted over the predetermined distance in position from a former state.

3. The method according to claim 2, wherein processing the character information is comprised of:
- changing the character in position with reference to the first position data if the character is in a stop state; and
- changing the character in position by calculating a shift distance obtained from comparing the just-prior position data with the latest position data received after the predetermined interval from the just-prior position data if the character is shifting in position.

4. The method according to claim 3, wherein the character is shifted in position with a frame shift distance obtained from dividing the shift distance by the number of frames per the predetermined interval that is output from multiplying the predetermined interval by the number of frames per second of an animation representing the character.

5. The method according to claim 1, wherein the character's motions included in the motion data are provided with motion numbers different each other and the motion data is transferred and received in forms of the motion numbers.

6. The method according to claim 1, wherein transferring the character information is comprised of immediately transferring the motion data to the second user if the character is changed in motion,
wherein processing the character information is comprised of immediately changing the character in motion in correspondence with the received motion data.

7. The method according to claim 1, wherein the motion data includes still motion data operable only if the character is in a stop state, and shift motion data operable even if the character is shifting in position.

8. The method according to claim 3, wherein the motion data includes still motion data operable only if the character is in a stop state, and shift motion data operable even if the character is shifting in position,
wherein processing the character information is comprised of changing the character in motion after shifting the character in correspondence with a comparison between the just-prior position data and the latest position data if the still motion data is received within the predetermined interval.

9. A program-embedded computer-readable recording medium operating the method according to one of claims 1 through 8.
